# EUROPEAN PATENT APPLICATION

(11) **EP 2 380 757 A2**
(43) Date of publication of application: **26.10.2011**
(21) Application number: 11162717.0
(22) Date of filing: 15.04.2011
(51) Int. Cl.: B60C 11/00, B60C 11/14

(54) **Pneumatic tire with a tread comprising fibers**

(30) Priority: 26.04.2010 US 767303
(71) Applicant: The Goodyear Tire & Rubber Company, Akron, OH 44316-0001 (US)
(72) Inventor: Fosam, Richard, L-7462, Moesdorf (LU); Lechtenboehmer, Annette, L-9048, Ettelbruck (LU); WELTER, Carolin Anna, 69207, Sandhausen (DE)
(74) Representative: Kutsch, Bernd

(57) **Abstract**

A pneumatic tire comprising a tread (52) comprising a tread surface which is designed to be ground contacting when the tire (50) is operated on a vehicle is disclosed. The tread surface comprises a rubber composition comprising a diene based elastomer and fibers (102), the fibers (102) extending lengthwise in an at least substantially axial direction (106) of the tire (50).

## Description

### Background of the Invention

There has been an increasing demand to develop tires with a high level of handling performance, good stability and steering response when changing lanes, avoiding obstacles on the road and cornering. Improved road grip without compromising stability is critical for vehicles traveling at high speed. However, higher tire operating temperatures are encountered at high speeds than are experienced during normal driving and the hot rubber in the tire becomes more pliable which reduces the handling stability of the tire, a so-called "borderline" use of said tire.

A widely adopted method to improve stability, particularly road gripping properties, is to increase the hysteresis loss of tread rubber compositions. A large hysteresis loss during the deformation of tread is used for increasing a friction force between the tread and road surface. However, a significant increase of heat buildup will occur during the running of the tires as the hysteresis loss of the tread rubber becomes large, causing wear resistance of the tread rubber to deteriorate rapidly. On the other hand, it is believed that controllability is significantly influenced by hardness (which is closely related to cornering stiffness of a tire) and breaking strength of rubber compositions. In order to enhance controllability, especially steering response, it is necessary to increase the stiffness of the tire compound in general and the tread in particular, which in most cases results in lower hysteresis loss. It is very difficult to achieve both of these desired properties by conventional compounding techniques. There is therefore a need for a tread with improved cornering stiffness.

### Summary of the Invention

The present invention is directed to a pneumatic tire in accordance with claim 1.

Dependent claims refer to preferred embodiments of the invention.

In accordance with a preferred aspect of the invention, the tire has a cornering power greater, more preferably at least 5% greater, than an otherwise identical tire with the fibers randomly oriented.

In accordance with a preferred aspect of the invention, the fibers are polyaramid fibers, more preferably fibrillated polyaramid fibers.

In accordance with yet a preferred aspect of the invention, the fibers are short fibers such as fibers having a length in a range of from 0.1 to 10 mm.

### Brief Description of the Drawings

FIG. - 1 shows a tire according to one embodiment of the invention.
FIG. - 2 shows a tread stock for a tire according to the invention.
FIG. - 3 shows a detail of a tire according to the invention.
FIG. - 4A, B and C show three embodiments for a tread of a tire according to the invention.

### Description of the Invention

There is disclosed a pneumatic tire comprising a tread, the tread comprising a ground contacting rubber composition comprising a diene based elastomer and preferably short fibers, wherein the fibers extend lengthwise in a substantially axial direction of the tire.

With reference now to FIG. - 1, a radial tire 50 in cross-section has a tread portion 52, sidewalls 54, and a carcass 56 which typically comprises a plurality of radially extending reinforcing wires or cords of, for example, steel, nylon, polyester, rayon or glass embedded in a rubber matrix. The carcass 56 may consist of one or more plies; one ply is shown here. Preferably, the ends of carcass 56 extend around bead wires 58 and are folded back in the conventional manner. In proximity with the beads 58 are a pair of apexes 60 and chafers 64. Preferably, a plurality of circumferentially extending reinforced rubber belts 66 are interposed between tread 52 and carcass 56.

The tread 52 is constructed from a tread stock, which may be produced by calendaring or injection molding of rubber compound containing preferably short fibers, see for example US-A- 4,871,004; US-A- 6,106,752; US-A- 6,387,313; and US-A- 6,899,782. In the case of calendaring for example, a rubber compound containing fibers may be calendared into thin sheets wherein the fibers orient such that their length dimension is extended substantially in the mill direction, that is, in the direction of forward propagation of the sheet through the calendar. Calendared sheets so produced can then be stacked to produced tread stock of the desired tread thickness. In fabricating the tread stock, the calendared sheets may be positioned so that the oriented fibers are disposed at a desired orientation with respect to the axial or circumferential directions of the tire in which the tread stock is used. In this context, when referring to the orientation of the fibers as being oriented in a "substantially axial direction of the tire," it is meant herein that the tread is constructed from tread stock wherein the rubber compound comprising the fibers is oriented preferably with its mill direction parallel to the axial direction of the tire. The tread is thereby anisotropic, showing directionality of physical and performance properties due to the directionality of the short fibers.

With reference now to FIG. - 2, tread stock 100 with short fibers 102 is shown. Tread stock 100 may be used to make tread 52 during building of tire 50. Tread stock 100 is typically positioned during tire build according to the circumferential direction 104 of the tire and axial direction 106 of the tire, with running surface 108 positioned to enable contact for example with a ground or road surface. In FIG. - 2, fibers 102 are extended lengthwise in a substantially axial direction.

FIG. - 3 shows a close up view of fibers 102 extended lengthwise in a substantially axial direction. By "extend lengthwise," it is meant that the longest dimension of a given fiber 102 is extended to its extension length 110. As will be understood, fibers 102 dispersed in a rubber composition may not be fully extended rod-like along their physical length. Instead and as shown in FIG. - 3, fibers 102 may exhibit some curvature along their extension length 110, owing to the flow of rubber during compounding and molding. The dispersed fiber 102 may be then described by extension length 110 along an angle of extension that describes its extension. The extension angle is illustrated in FIG. - 3 as the angle θ, which is the angle between extension length 110 and line 112 drawn parallel to axial direction 106. In the embodiment shown in FIG. - 3, for a given dispersed short fiber 102, the direction of extension length 110 is within a given angle θ of a line 112 drawn parallel to the axial direction of the tire. For given fiber 102, angle of extension θ is measured in a plane containing extension length 110 and line 112.

Extension length 110 and angle of extension θ may be determined for example by a least squares regression to determine a best fit line through a microscopic image of a dispersed fiber with reference to appropriate dimensional axes. In one embodiment, the extension length of at least 90 percent of the short fibers is within 30 degrees of a line drawn parallel to the axial direction of the tire, i.e. θ ≤ 30 degrees. In one embodiment, the extension length of at least 90 percent of the short fibers is within 15 degrees of a line drawn parallel to the axial direction of the tire, i.e. θ ≤ 15 degrees.

Fibers 102 may be disposed in rubber compound across the axial width of tread 52, or in one or more distinctly defined zones of the tread. In this way, the beneficial effect of the oriented fibers may be realized with minimal use of fibers. With reference now to FIGS.- 4A, 4B and 4C, three embodiments of the tread are shown in cross-section as 52a, 52b, and 52c respectively, with details such as tread grooves not shown for simplicity. In FIG. - 4A, tread 52a is shown to include oriented short fibers across the entire tread width TW. In FIG. - 4B, tread 52b includes adjacent first and second circumferential tread zones 68, 70. First circumferential zone 68 located proximate to shoulder 78 extends only a fraction of tread width TW and includes short fibers 102 extended lengthwise in a substantially axial direction of the tread 52b. Second circumferential zone 70 does not include oriented fibers. In FIG. - 4C, tread 52c includes a circumferential central tread zone 76 and first and second circumferential outer tread zones 72, 74 each disposed axially distally from and on opposite sides of the central zone. First and second circumferential outer tread zones 72, 74 are disposed proximate to shoulders 80, 82. First and second circumferential outer tread zones 72, 74 include short fibers 102 extended lengthwise in a substantially axial direction of the tread 52c, and central circumferential tread zone 76 does not include oriented fibers.

The rubber composition such as that used in tread stock 100 and tread 52 includes short fibers. Short fibers may include any textile fibers as are known in the art. In a preferred embodiment, the short fibers are selected from the group consisting of polyaramid fibers, polyester fibers, polyamide fibers, polyketone fibers, polybisoxazole fibers, rayon fibers, and metal fibers. More preferably, the fibers are polyaramid fibers. Preferably, the fibers are fibrillated polyaramid fibers.

Preferably, the fibers have a length ranging from 0.1 to 10 mm. Preferably, the fibers have a thickness ranging from 1 to 20 microns.

In one embodiment, the fibers are present in the rubber composition in an amount ranging from 0.5 to 30 phr. In an other embodiment, the fibers are present in the rubber composition in an amount ranging from 5 to 15 phr. The fibers may be used as the raw fiber. Preferably, they are pre-mixed with an elastomer as a masterbatch.

The rubber composition may be made with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives; for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect, the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 28 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. Preferably, from 20 to 80 phr of silica are used.

The commonly employed siliceous pigments which may be used in the rubber compound include conventional pyrogenic and precipitated siliceous pigments (silica). Preferably, precipitated silica is used. The conventional siliceous pigments employed in this invention are precipitated silicas such as, for example, those obtained by the acidification of a soluble silicate, e.g., sodium silicate.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. Preferably, from 20 to 80 phr of carbon black are used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100g.

Other fillers may be used in the rubber composition including particulate fillers including ultra high molecular weight polyethylene (UHMWPE), crosslinked particulate polymer gels and plasticized starch composite filler. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z―Alk―Sₙ―Alk―Z l

in which Z is selected from the group consisting of 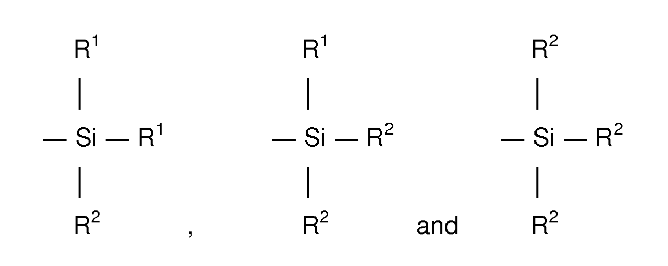 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 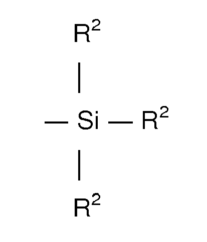 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The pneumatic tire of the present invention may be a race tire, passenger tire, aircraft tire, agricultural, earthmover, off-the-road or truck tire. In one embodiment, the tire is a passenger or truck tire. The tire may be a radial or bias tire.

Vulcanization of the pneumatic tire of the present invention is generally carried out at conventional temperatures ranging from 100ºC to 200ºC. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example

In this example, the effect of orienting fibers in the tread compound of a tire is illustrated. The unexpected effect of a surprising increase in cornering power in a tire with laterally oriented fiber as compared with a tire with circumferentially oriented or randomly oriented tires is shown.

Otherwise identical tires (205/55R16) were constructed with three different short fiber orientations in the tread. Tire A was a control tire with fibers randomly distributed in the tread compound. Tire B was a comparative tire with fibers oriented substantially parallel to the circumferential direction of the tire. Tire C was representative of the present invention and had fibers oriented substantially perpendicular to the circumferential direction of the tire and substantially parallel to the axial (lateral) direction of the tire.

Tread compound for all three tires was mixed including 7 phr of chopped aramid fibers (Kevlar® pulp) in a compound of 30 phr polybutadiene, 23.5 phr natural rubber, and 46.5 phr styrene-butadiene rubber. The rubber mixing following procedures as are known in the art, with a multi-step mix procedure including non-productive and productive mix steps. Standard amounts of curatives, processing aids, antidegradants, and fillers were also used.

For control tire A, the tread compound was extruded to form the tread stock. The extruded tread stock with randomly oriented fibers was then used to construct tire A.

For tires B and C, the tread compound was calendared to a thickness of 1.63 mm with a small mill gap to increase fiber alignment in the compound. The calendared sheet was then cut into appropriately sized sections and the sections stacked four high to construct each tread. For tire B, each calendared sheet was oriented with the mill direction parallel to the circumferential direction of the tire. For tire C, each calendared sheet was oriented with the mill direction parallel to the axial direction of the tire (i.e., perpendicular to the circumferential direction of the tire). The stacked calendared sheets were then used to construct tires B and C. All tires were cured in a tire mold following standard curing protocol.

Microscopic inspection of microtomed sections of cured tread samples from each tire confirmed the orientation of fibers in tire B substantially parallel to the circumferential direction of tire B and in tire C substantially parallel to the axial direction of tire C, and a lack of definitive orientation of fibers in tire A.

The tires were tested for cornering power at speeds of 7 km/hr and 50 km/hr on an MTS Flat-Trac® dynamic force and moment testing machine. Results are given in Table 1.

**Table 1**

| 205/55R16 inflated to 270 kPa with 7 inch rim width | | | | | | |
|---|---|---|---|---|---|---|
| | Tire Speed = 7 km/hr | | | Tire Speed = 50 km/hr | | |
| | Cornering Power, N/degree | | | Cornering Power, N/degree | | |
| Load, N | Tire A | Tire B | Tire C | Tire A | Tire B | Tire C |
| 1448 | 595 | 597 | 648 | 553 | 550 | 575 |
| 2172 | 889 | 891 | 970 | 825 | 827 | 853 |
| 4827 | 1728 | 1733 | 1844 | 1535 | 1540 | 1598 |
| 6420 | 1830 | 1836 | 1952 | 1579 | 1579 | 1669 |
| 8013 | 1767 | 1775 | 1883 | 1466 | 1466 | 1563 |
| | | | | | | |

| Load, N | | % increase vs control | | | % increase vs control | |
|---|---|---|---|---|---|---|
| | | | | | | |
| 1448 | - | 0.3 | 8.9 | - | -0.5 | 4.0 |
| 2172 | - | 0.2 | 9.1 | - | 0.2 | 3.4 |
| 4827 | - | 0.3 | 6.7 | - | 0.3 | 4.1 |
| 6420 | - | 0.3 | 6.7 | - | 0.0 | 5.7 |
| 8013 | - | 0.5 | 6.6 | - | 0.0 | 6.6 |

As seen in Table 1, Tire C with short fibers oriented substantially parallel to the axial (lateral) tire direction of the tread showed an unexpectedly higher cornering power as compared with Tire B with short fibers oriented substantially parallel to the circumferential direction of the tire direction of the tread. Significantly, at a tire speed of 7 km/hr Tire C showed a 6.6 to 9.1 percent increase in cornering power versus control, as compared with a 0.2 to 0.5 percent increase for Tire B. Similarly, at a tire speed of 50 km/hr Tire C showed a 3.4 to 6.6 percent increase in cornering power versus control, as compared with a -0.5 to 0.3 percent change for Tire B.

In one embodiment, then, the tire has a cornering power greater than an otherwise identical tire with the short fibers randomly oriented. In one embodiment, then, the tire has a cornering power at least five percent greater than an otherwise identical tire with the short fibers randomly oriented.

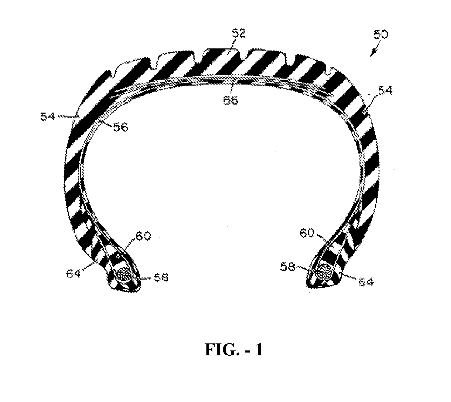

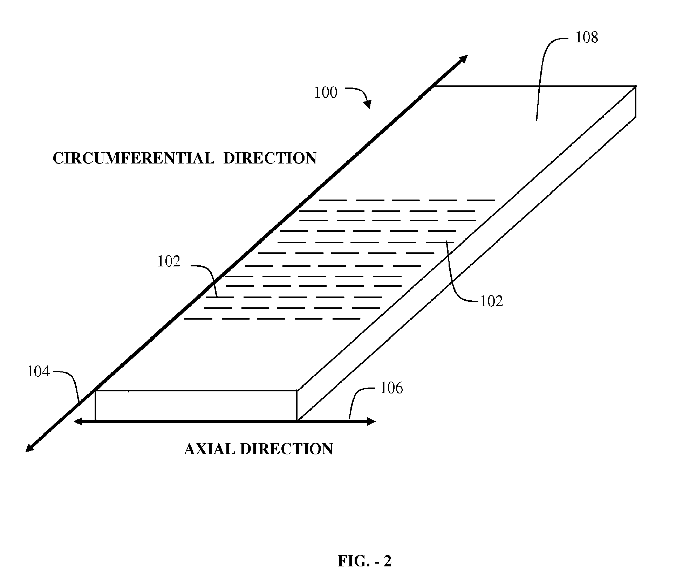

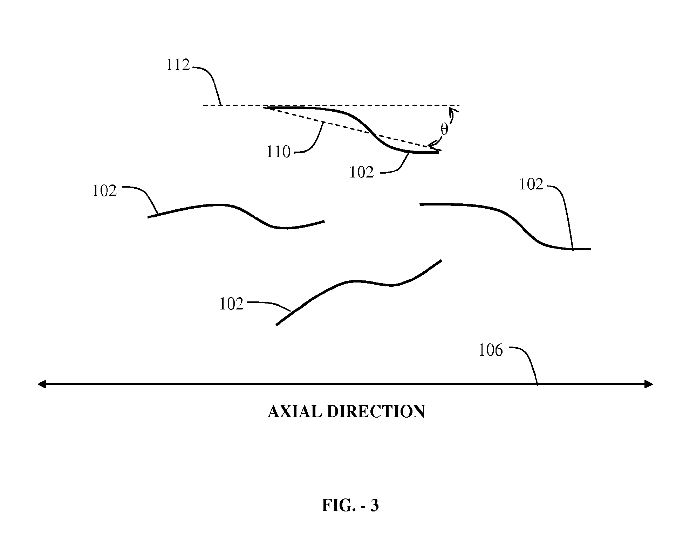

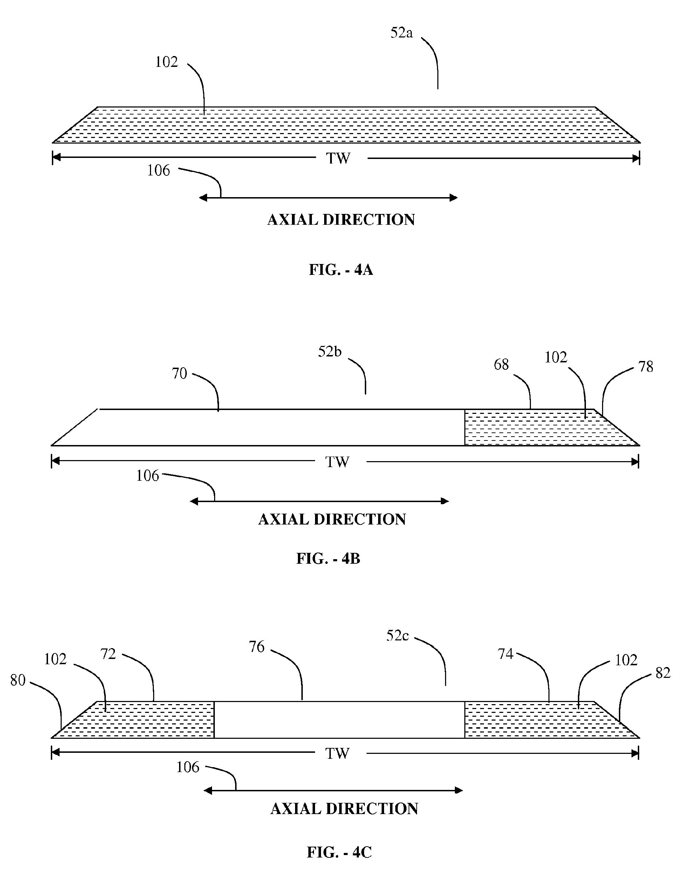

## Claims

1. A pneumatic tire comprising a tread (52), the tread (52) comprising a tread surface which is designed to be ground contacting when the tire (50) is operated on a vehicle, the tread surface comprising a rubber composition comprising a diene based elastomer and fibers (102), the fibers (102) extending lengthwise in an at least substantially axial direction (106) of the tire (50).

2. The pneumatic tire of claim 1 wherein the rubber composition is oriented with its mill direction parallel to the axial direction (106) of the tire (50).

3. The pneumatic tire of claim 1 or 2 wherein the fibers have an extension length (110), wherein the extension length (110) makes an angle θ with a line drawn parallel to the axial direction (106) of the tire, and wherein for at least 90 percent of the fibers (102) the angle θ is less than or equal to 30 degrees.

4. The pneumatic tire of claim 3 wherein for at least 90 percent of the fibers (102) the angle θ is less than or equal to 15 degrees, alternatively less than or equal to 10 degrees.

5. The pneumatic tire of at least one of the previous claims wherein the fibers (102) are selected from the group consisting of polyaramid fibers, fibrillated polyaramid fibers, polyester fibers, polyamide fibers, polyketone fibers, polybisoxazole fibers, rayon fibers, and metal fibers.

6. The pneumatic tire of at least one of the previous claims wherein the tread (52b) comprises a first and a second circumferential zone (68, 70), wherein the first and second circumferential zones (68, 70) comprise different rubber compositions, wherein the second circumferential zone (68) is disposed proximate to a tire shoulder (78), and wherein the tread surface in the second circumferential zone (68) comprises the rubber composition comprising the diene based elastomer and the fibers (102) extending lengthwise in the at least substantially axial direction (106) of the tire (50).

7. The pneumatic tire of claim 6 wherein the first and second circumferential zones (68, 70) are located laterally adjacent; and/or wherein the first circumferential zone (70) is free of the fibers (102) extending lengthwise in the at least substantially axial direction (106) of the tire (50).

8. The pneumatic tire of claim 6 or 7 wherein the second circumferential zone (68) is located on the axially outer side of the tire (50) when the tire (50) is mounted on a vehicle in accordance with the tire's specification.

9. The pneumatic tire of claim 6, 7 or 8 wherein the first circumferential zone (70) has an axial width in a range of from 50% to 95%, alternatively 60% to 80% or 70% to 95%, of the tire tread width (TW), and the second circumferential zone (68) has an axial width in a range of from 5% to 55%, alternatively 20% to 40% or 5% to 30%, of the tire tread width (TW).

10. The pneumatic tire of at least one of the previous claims wherein the tread (52c) comprises a central circumferential zone (76) and a first and a second circumferential outer zone (72, 74), wherein the first and the second circumferential outer zones (72, 74) comprise different rubber compositions, wherein the first circumferential outer zone (72) is disposed proximate to a tire shoulder (80), wherein the second circumferential outer zone (74) is disposed proximate to the other tire shoulder (82), and wherein the tread surface in the first circumferential outer zone (72) and/or the tread surface in the second circumferential outer zone (74) comprises the rubber composition comprising the diene based elastomer and the fibers (102) extending lengthwise in the at least substantially axial direction (106) of the tire (50).

11. The pneumatic tire of at least one of the previous claims wherein the tread (52c) comprises a central circumferential zone (76) and a first and a second circumferential outer zone (72, 74), wherein the first and the second circumferential outer zones (72, 74) comprise the same rubber composition and the central circumferential zone (76) comprises a different rubber composition, wherein the first circumferential outer zone (72) is disposed proximate to a tire shoulder (80), wherein the second circumferential outer zone (74) is disposed proximate to the other tire shoulder (82), wherein the tread surface in the first circumferential outer zone (72) and in the second circumferential outer zone (74) comprises the rubber composition comprising the diene based elastomer and the fibers (102) extending lengthwise in the at least substantially axial direction (106) of the tire (50), and, optionally, wherein the rubber composition of the central circumferential zone is free of fibers or free of such fibers (102).

12. The pneumatic tire of claim 10 or 11 wherein central circumferential zone (76) has an axial width in the range of from 30 to 80%, alternatively 40% to 60%, of the tire tread width (TW), and the first and second circumferential outer zones (72, 74)) each have an axial width, preferably the same axial width, in a range of from 10% to 35%, alternatively 20% to 30% of the tire tread width (TW).

13. The pneumatic tire of at least one of the previous claims wherein the tread (52) comprises a circumferential central zone (76) and at least one circumferential outer zone disposed axially distally from the central zone (76) and proximate to a tire shoulder, wherein the central zone (76) and outer zone comprise different rubber compositions, and wherein outer zone comprises the rubber composition comprising the diene based elastomer and the fibers (102) extending lengthwise in the at least substantially axial direction (106) of the tire (50),

14. The pneumatic tire of at least one of the previous claims, wherein the fibers (102) have a length in a range of from 0.1 to 10 mm and/or a thickness in a range of from 1 to 20 micrometer.

15. The pneumatic tire of at least one of the previous claims, wherein the fibers are present in the rubber composition in an amount ranging from 0.5 to 30 phr, alternatively from 3 to 15 phr.
